# FASCICULE DE BREVET EUROPEEN

(11) **EP 1 997 977 B1**
(45) Date de publication et mention de la délivrance du brevet: **09.01.2013**
(21) Numéro de dépôt: 08157410.5
(22) Date de dépôt: 02.06.2008
(51) Int. Cl.: E04F 13/08, B29C 44/12, B29C 44/38, E04C 2/288

(54) **Panneau préfabriqué pour le revêtement mural de bâtiment**
Fertigwandplatte zur Wandverkleidung von Gebäuden
Prefabricated panel for covering the wall of a building

(30) Priorité: 01.06.2007 FR 0755406
(43) Date de publication de la demande: 03.12.2008
(73) Titulaire: Veta France, 62810 Avesnes le Comte (FR)
(72) Inventeur: Deudon, Daniel, 62810 Avesnes Le Comte (FR); Aubert, Gilles, 59232 Vieux Berquin (FR)
(74) Mandataire: Balesta, Pierre

(56) Documents cités:
- EP-A- 0 145 675
- EP-A- 0 345 244
- BE-A1- 891 963
- DE-A1- 1 807 883
- FR-A- 1 261 893
- FR-A1- 2 378 629
- US-A- 3 817 012

## Description

La présente invention est relative à un panneau préfabriqué pour le revêtement mural des bâtiments. Le panneau pourra être commercialisé par les négociants de matériaux ou les entreprises de bâtiment spécialisés en façade ou revêtement mural. Il trouvera son application dans le domaine du bâtiment et des travaux publics pour la pose sur les murs, tant à l'intérieur qu'à l'extérieur des bâtiments.

Les panneaux préfabriqués connus actuellement se composent généralement de deux couches, à savoir une première couche constituant une peau externe apparente revêtant le mur du bâtiment, cette couche étant constituée de plaquettes agencées en rangées et espacées entre elles, et une seconde couche de liant disposée du côté interne, au contact de la face arrière des plaquettes pour les solidariser. Ces panneaux sont généralement de grande dimension ; par ailleurs, ils présentent une épaisseur importante pour éviter qu'ils ne se cassent lors de leur transport et de leur manipulation. Ces panneaux ont par conséquent un encombrement et un poids importants rendant leur manipulation difficile lors de la pose. De plus, notamment pour la pose en extérieur, les panneaux sont éventuellement exposés à une prise au vent qui a tendance à accroître la difficulté de manipulation. En outre, ces panneaux s'emploient essentiellement à l'extérieur des bâtiments, du fait de leur épaisseur qui engendre une perte d'espace considérable lors de la pose en intérieur ; cette épaisseur de panneau nécessite par ailleurs d'effectuer des modifications des supports initiaux, voire d'éléments complémentaires, sur lesquels lesdits panneaux sont rapportés. De telles modifications sont par exemple nécessaires pour réaliser des habillages au niveau des contours de portes ou de fenêtres.

La présente invention a pour objet de pallier les inconvénients des panneaux actuels, en concevant un panneau présentant une épaisseur réduite, tout en conservant éventuellement une largeur et une hauteur plus ou moins standard, c'est-à-dire économiquement avantageuse lors de la pose, ainsi qu'une planéité parfaite du panneau ainsi obtenu. Cette réduction d'épaisseur présente pour avantage de faciliter la préhension du panneau et de réduire son poids, ce qui par conséquent facilite sa manipulation lors de la pose et permet de respecter les limites de charge autorisées par la législation du travail actuelle. La réduction d'épaisseur permet également d'utiliser le panneau selon l'invention tant pour la pose en intérieur qu'en extérieur de bâtiment sans engendrer une perte d'espace trop importante et ne nécessitant pas des modifications trop importantes des supports existants pour sa pose au niveau des contours de portes ou fenêtres, notamment. Par ailleurs, la réduction d'épaisseur du panneau permet éventuellement d'utiliser celui-ci en combinaison avec d'autres matériaux rigides présentant des propriétés d'isolation thermique ou phonique, ledit matériau isolant étant disposé entre la paroi et le panneau préfabriqué selon l'invention lors de la pose.

A cet effet, l'invention met en oeuvre un panneau préfabriqué pour le revêtement de murs de bâtiments, comprenant au moins une couche externe constituée de plaquettes, notamment en terre cuite, en céramique, en béton, en pierre ou tout autre produit reconstitué, espacées les unes des autres et disposées en rangées, et une couche interne, disposée au contact de la face arrière de la couche externe, et constituant une couche de liant pour les plaquettes. La couche de liant est une mousse polyuréthane et présente au moins une densité de 150 kg/m³, l'épaisseur totale dudit panneau étant inférieure à 40 mm. Les propriétés de moussage de la mousse polyuréthane sont obtenues de préférence sans adjonction de gaz pour obtenir cette aptitude à mousser.

Une telle augmentation de la densité de la couche de liant permet avantageusement la réduction de l'épaisseur de ladite couche de liant, et par conséquent celle du panneau préfabriqué qui atteint une épaisseur totale inférieure à 40 mm, dans le but de résoudre les inconvénients existants précités, tout en conservant une rigidité et une planéité remarquables du panneau.

Les panneaux connus utilisent une couche interne servant de liant constituée d'une mousse polyuréthane qui présente une densité de l'ordre de 30 à 60 kg/m³. Tel est le cas notamment dans les documents EP 0.345.244 A, BE 891.963 A1 et EP 0.145.675 A. L'augmentation très importante de la densité de la mousse polyuréthane pour le panneau selon la présente invention rend les procédés de fabrication actuels de panneaux incompatibles. En effet, selon les procédés actuels, ceux-ci utilisent un moule à l'intérieur duquel sont disposées en rangées les plaquettes, avec un espacement entre chacune d'elles ; une couche de silice est ensuite déposée dans le moule de manière à combler les espacements entre lesdites plaquettes. On dépose ensuite sur l'axe médian, à plusieurs endroits sur la face arrière des plaquettes et de la couche de silice, du polyuréthane sous forme liquide, présentant une densité de l'ordre de 30 à 40 kg/m³, et on ferme ensuite le moule au moyen d'un couvercle, ladite fermeture permettant de compresser le polyuréthane sous forme liquide pendant la polymérisation afin de le répartir sur toute la surface des plaquettes et de la couche de silice, et constituer ainsi une couche de liant homogène. L'utilisation d'un tel procédé avec une épaisseur et une densité de mousse polyuréthane telles que prévues sur le panneau selon la présente invention, engendrerait une mauvaise répartition de la couche de liant sur toute la surface des plaquettes, celles-ci risquant alors de se décoller du panneau.

Par ailleurs, certains documents de l'art antérieur, tels que le document EP 0.345.244, visent déjà à résoudre ce problème de répartition de la couche de liant sur toute la surface des plaquettes avec des densités de la couche de liant de l'ordre de 50 kg/m³, et réalisent pour cela un épandage uniforme de la mousse polyuréthane sur toute la surface des plaquettes. En outre, selon le document EP 0.345.244, ainsi que de manière générale pour les procédés de fabrication de panneaux préfabriqués connus actuellement, les moules comportent un gabarit profilé ou quadrillage métallique, par exemple en aluminium, ce gabarit ou quadrillage étant soit agencé soit rapporté dans le fond du moule, ledit gabarit formant des éléments en saillie destinés à assurer le positionnement des plaquettes et leur maintien en position écartée les unes par rapport aux autres dans le moule. Les plaquettes sont donc posées dans le moule entre les éléments en saillie, écartées les unes par rapport aux autres, puis du sable est disposé entre les plaquettes au moyen d'un pochoir, par exemple. Le dépôt de matière polyuréthane moussable d'une densité de l'ordre de 50 kg/m³ est soit réalisé avec une répartition uniforme sur toute la surface des plaquettes, tel que décrit dans le document EP 0.345.244, soit réalisé par un dépôt en bloc sur les plaquettes, après quoi ce dépôt de matière moussable est couvert par une feuille de protection, le couvercle assurant la fermeture du moule et exerçant une pression sur la matière moussable pour la répartir convenablement sur toute la surface des plaquettes. Selon de tels procédés, la matière moussable tend à venir se plaquer sur les côtés du moule lors de sa fermeture, d'où la nécessité d'utiliser un papier de protection sur les parois internes du contour du moule pour éviter que le matériau ne se colle sur lesdites parois, et ainsi permettre le démoulage et éviter les nettoyages fréquents de celui-ci. Par ailleurs, ce procédé de fabrication décrit dans EP 0.345.244, ainsi que les procédés de fabrication de l'art antérieur, nécessitent l'utilisation d'une feuille de protection supplémentaire disposée au-dessus de la matière moussable avant la fermeture de la partie supérieure du moule constituant le couvercle, cette feuille ayant pour fonction d'une part, d'éviter que la matière ne se colle sur la face interne du couvercle de moule, et d'autre part, d'éviter le flambage du panneau.

Un autre inconvénient, selon l'art antérieur, réside dans l'utilisation d'un moule comportant un gabarit profilé au quadrillage métallique, agencé ou rapporté dans le fond du moule, tel que précisé ci-dessus. En effet, cette conception nécessite l'utilisation de plaquettes dimensionnées, de dimensions légèrement inférieures à celles des emplacements prévus sur le gabarit pour le positionnement desdites plaquettes.

Par ailleurs, lors de la fermeture du moule, la pression de la matière moussable exercée sur les plaquettes et le glissement de ladite matière qui se répartit sur toute la surface du moule tend à déplacer lesdites plaquettes ; celles-ci pivotent alors à l'intérieur du gabarit profilé ou quadrillage métallique, et peuvent donc se bloquer à l'intérieur de celui-ci. Lors du démoulage, il est donc fréquent que des plaquettes présentent des bords cassés ou effrités. Un tel phénomène de déplacement et de blocage des plaquettes dans le gabarit métallique ne serait qu'amplifié en utilisant un matériau moussable de forte densité tel que le prévoit la présente invention. C'est donc un autre inconvénient que se propose de pallier la présente invention ; la résolution de tels inconvénients permettant avantageusement l'emploi d'une mousse polyuréthane de forte densité, supérieure à 150 kg/m³ permettant d'atteindre une épaisseur totale inférieure à 40 mm.

Pour pallier les inconvénients précités, l'invention met en oeuvre un conformateur pour la fabrication de panneaux préfabriqués composés notamment de plaquettes de parement constituant une couche externe, et d'une couche interne disposée au contact de la face arrière de la couche externe et constituant une couche de liant pour les plaquettes, la couche de liant étant une mousse polyuréthane. Un tel conformateur comporte, entre autres, un gabarit, également appelé chaussette, , ledit gabarit formant un quadrillage agencé pour recevoir les plaquettes en les maintenant écartées entre elles avec un espacement correspondant à un joint de maçonnerie. Le gabarit est remarquable en ce qu'il est constitué dans un matériau souple, notamment du silicone. Le gabarit en matériau souple dispose donc d'une pluralité d'emplacements ou d'empreintes pour la réception des plaquettes, ces emplacements ou empreintes étant disposés à la manière d'un mur de briques, par exemple. Les plaquettes du panneau sont disposées dans ces emplacements ou empreintes lors de la fabrication du panneau, l'utilisation d'un matériau souple est remarquable en ce qu'il accepte des tolérances dimensionnelles des plaquettes, ce qui limite les contraintes de fabrication de celles-ci et contribue à la réduction du coût de production. En effet, que les dimensions des plaquettes soient légèrement inférieures ou supérieures à celles des emplacements sur le gabarit, lesdites plaquettes peuvent être positionnées sans difficulté à l'intérieur desdits emplacements du fait de l'aptitude du gabarit à se déformer.

Un tel gabarit est toutefois connu du document FR 2.378.629 A1.

En outre, le conformateur pour la fabrication de panneaux préfabriqués comprend également une partie inférieure formant un fond pour la réception du gabarit tel que décrit ci-dessus, et de la couche externe et de la couche interne, et une partie supérieure formant un couvercle pour la fermeture de celui-ci préalablement à une étape d'expansion et de stabilisation de la mousse polyuréthane. La partie inférieure comprend des moyens de réception et de compression du contour d'un gabarit pour la fabrication de panneaux préfabriqués tels que décrits ci-dessus, lequel permettant la réception des plaquettes en les maintenant écartées entre elles avec un espacement correspondant à un joint de maçonnerie. De telles caractéristiques d'un conformateur sont décrites dans le document FR 2.378.629 A1.

Selon le conformateur objet de l'invention, ces moyens de réception et de compression du contour d'un gabarit souple sont constitués d'un contour rétractable formant une empreinte agencée pour réceptionner le gabarit sur le fond de la partie inférieure, ledit contour étant de forme similaire à celle du contour du gabarit souple, ce contour permettant en position détendue l'introduction du gabarit dans l'empreinte et en position rétractée le resserrage de celui-ci sur le contour du gabarit de manière à le comprimer, ladite compression assurant le resserrage des emplacements du gabarit dans lesquels sont disposées les plaquettes, ce qui assure remarquablement leur immobilisation dans le gabarit. Un tel gabarit, et un tel conformateur équipé dudit gabarit, présentent pour avantage d'éviter les contraintes sur les bords périphériques des plaquettes et leur blocage dans ledit gabarit lorsque celles-ci tendent à bouger dans le conformateur sous l'action du glissement de la matière polyuréthane lors de sa répartition sur toute la surface du panneau, suite à la fermeture du conformateur. Ainsi, lors du démoulage, le gabarit en silicone ou toute autre matière souple se retire très facilement du conformateur, le contour rétractable sur la partie inférieure étant en position détendue, ce qui permet d'extraire sans difficulté le panneau préfabriqué. Par ailleurs, le gabarit en silicone ou toute autre matière souple se déforme facilement, ce qui permet de retirer le gabarit du panneau préfabriqué extrait du conformateur, en évitant tout risque de casser ou d'effriter les bords des plaquettes.

En outre, le conformateur selon l'invention présente des moyens d'anti-adhérence agencés pour éviter que la mousse polyuréthane ne se colle sur ledit conformateur. Ces moyens d'anti-adhérence sont notamment mis en oeuvre, d'une part, sur les moyens de réception et de compression du contour du gabarit, c'est-à-dire, de préférence sur le contour rétractable agencé sur la partie inférieure ; et d'autre part, sur le couvercle de fermeture, de préférence au moyen d'une surface anti-adhérente assujettie sur la face interne dudit couvercle.

Un autre aspect de la présente invention, visant également à résoudre les inconvénients précités, porte sur l'optimisation de l'épandage en fonction de la densité de la mousse polyuréthane et de la forme et des dimensions du panneau préfabriqué à concevoir. Cette optimisation permet, d'une part, de limiter la pression exercée sur le polyuréthane à l'état liquide lors de la fermeture du conformateur pour assurer sa répartition sur toute la surface du panneau en évitant les déplacements de plaquettes et, d'autre part, de s'assurer que le polyuréthane à l'état liquide ne déborde pas sur les côtés du conformateur lors de sa fermeture, ce qui évite l'utilisation de feuilles complémentaires pour empêcher un tel débordement de matière, et permet d'optimiser la quantité de matière nécessaire pour la fabrication du panneau préfabriqué, le tout visant, d'une part, à réduire le temps et le coût de fabrication dudit panneau préfabriqué et, d'autre part, à réduire le poids et l'épaisseur dudit panneau.

Cette optimisation assure en outre l'épandage du polyuréthane à l'état liquide suivant une trajectoire propre à la forme et aux dimensions du panneau, en garantissant que cet épandage et la fermeture du conformateur soient réalisés avant toute expansion de la mousse polyuréthane répartie sur les plaquettes, ce qui aurait pour conséquence néfaste d'empêcher la répartition de la matière sur toute la surface des plaquettes du fait que la quantité de matière utilisée est minimisée en vue de réduire l'épaisseur de la couche interne. En effet, une telle contrainte ne se présentait pas dans l'art antérieur qui prévoit une couche interne de densité de l'ordre de 50 kg/m³ et d'épaisseur plus conséquente, étant donné la nécessité d'augmenter la rigidité du panneau pour compenser la faible densité ; de ce fait, l'utilisation d'une quantité de matière plus importante laisse le temps de fermer le moule pour épandre la matière moussable avant que celle-ci soit totalement expansée. Une telle tolérance n'est pas concevable pour la fabrication du panneau préfabriqué selon l'invention qui minimise les quantités.

A cet effet, le procédé de fabrication d'un panneau préfabriqué selon la présente invention comprend les étapes suivantes :
- de pose des plaquettes en rangées avec un espacement entre elles dans le fond d'un conformateur équipé d'un gabarit en matière souple, tel que décrit précédemment, les plaquettes étant disposées dans ledit gabarit ;
- une étape de pose d'une couche de silice entre les plaquettes jusqu'à atteindre l'épaisseur desdites plaquettes ;
- de chauffe du conformateur jusqu'à atteindre une température des plaquettes et de la silice comprise entre 30° et 40° C ;
- d'épandage de polyuréthane à l'état liquide d'une densité supérieure à 150 kg/m³, sur la face arrière des plaquettes et de la couche de silice avec une répartition selon un cheminement établi et spécifique à chaque type de panneau, à l'aide d'un bras manipulateur ou d'un robot d'épandage, ledit cheminement étant déterminé selon la forme du panneau, la densité de la mousse polyuréthane et l'épaisseur du panneau souhaité, voire également la forme et les dimensions des plaquettes ;
- de compression du polyuréthane à l'état liquide, la répartition dudit polyuréthane, selon le cheminement établi et spécifique, assurant la formation d'une couche homogène, sur toute la surface du panneau ;
- d'expansion et de stabilisation de la mousse polyuréthane ;
- de démoulage du panneau préfabriqué.

L'invention porte également sur une unité pour la mise en oeuvre du procédé de fabrication de panneaux préfabriqués selon l'invention. L'unité comprend au moins un conformateur agencé pour concevoir ledit panneau préfabriqué, ledit conformateur recevant un gabarit en matériau souple, notamment en silicone, conforme à la présente invention. En outre, cette unité comprend au moins un poste de fabrication et elle est équipée d'un convoyeur, notamment du type carrousel, apte à déplacer les conformateurs successivement sur chacun des postes de fabrication, depuis un poste de début de chaîne où le conformateur est vide et apte à recevoir les plaquettes, à un poste de fin de chaîne où le panneau préfabriqué est démoulé ou extrait, le conformateur étant ensuite nettoyé. L'unité selon l'invention comprend successivement :
- au moins un poste pour la pose des plaquettes dans le conformateur équipé du gabarit silicone, conforme à l'invention, puis pour la pose de la couche de silice entre lesdites plaquettes, ces étapes pouvant être décomposée sur deux postes ;
- au moins un poste équipé d'un tunnel de chauffe du conformateur contenant les plaquettes et la couche de silice, ledit tunnel étant apte à chauffer lesdites plaquettes et ladite couche de silice à une température comprise entre 30° et 40° C, et de préférence entre 35° et 40° C ;
- au moins un poste pour l'épandage équipé d'une machine de moussage pour la constitution du polyuréthane à l'état liquide, et d'un robot d'épandage pour la répartition dudit polyuréthane à l'état liquide suivant un cheminement établi sur la couche de plaquettes et de silice, ce cheminement étant spécifique à chaque type de panneau ;
- au moins un poste pour l'expansion et la stabilisation de la mousse polyuréthane, la mousse polyuréthane présentant une densité supérieure à 150 kg/m³ ;
- au moins un poste pour l'extraction du panneau préfabriqué et le nettoyage du conformateur.

Par ailleurs, l'unité comprend un convoyeur du type carrousel apte à déplacer les conformateurs successivement sur chacun des postes.

En outre, l'étape de fermeture du conformateur au moyen d'un couvercle, constitué par la seconde partie du conformateur, assurant une pression sur la mousse polyuréthane, peut être réalisée sur le poste pour l'épandage, après la répartition du liquide suivant le cheminement établi sur la couche de plaquettes et de silice, voire sur le poste pour l'expansion et la stabilisation de la mousse polyuréthane, avant que ladite étape d'expansion et de stabilisation ne commence.

Ces postes sont ordonnancés pour permettre une production en flux continu des panneaux préfabriqués.

La description ci-après s'appuie sur les figures 1 à 10, parmi lesquelles :
- les figures 1 à 5 présentent plusieurs exemples de conception du panneau préfabriqué selon l'invention,
- les figures 6 et 7 présentent deux modes préférentiels de conception de l'unité de production pour la mise en oeuvre de procédé de fabrication du panneau préfabriqué selon l'invention,
- la figure 8 présente un mode préférentiel de conception du gabarit en matériau souple pour la réception des plaquettes dans un conformateur prévu pour la fabrication de panneaux préfabriqués,
- la figure 9 présente un mode de conception préférentiel du conformateur selon l'invention pour la fabrication des panneaux préfabriqués, et
- la figure 10 présente le poste d'épandage du polyuréthane à l'état liquide sur les plaquettes disposées dans le gabarit souple, lui-même disposé dans le conformateur.

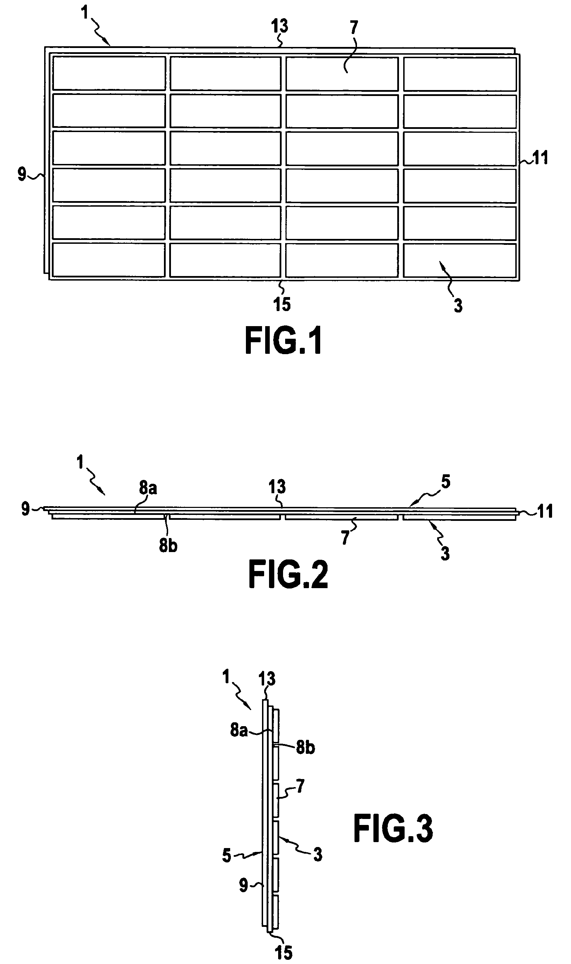

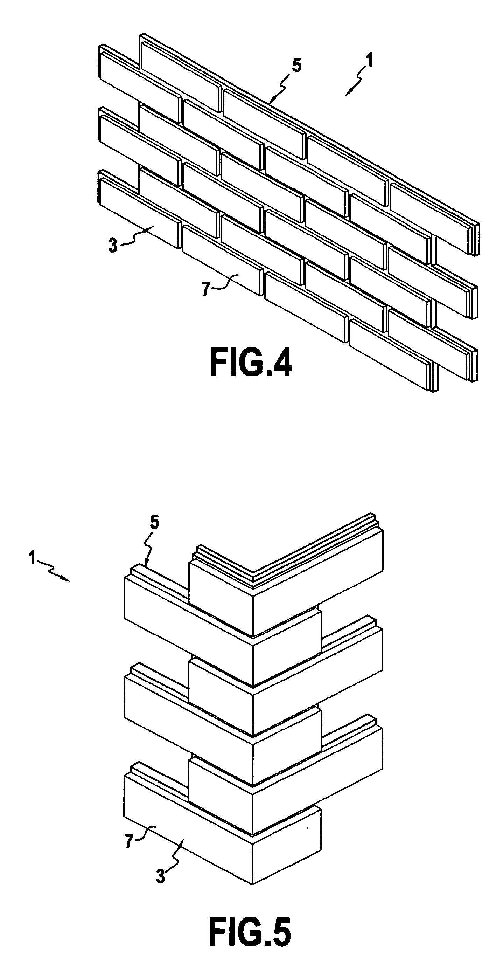

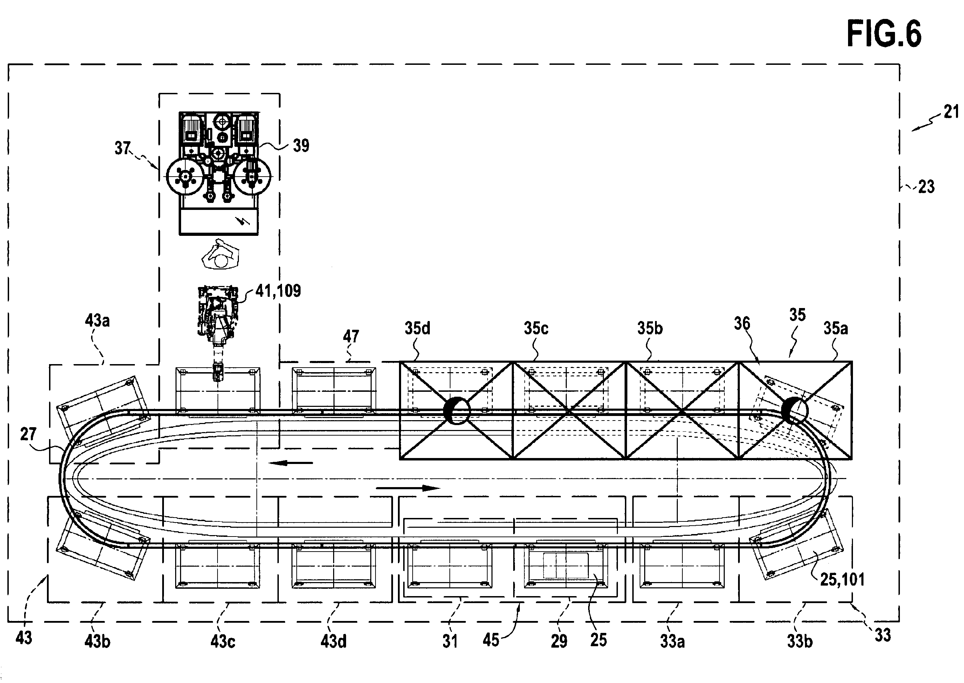

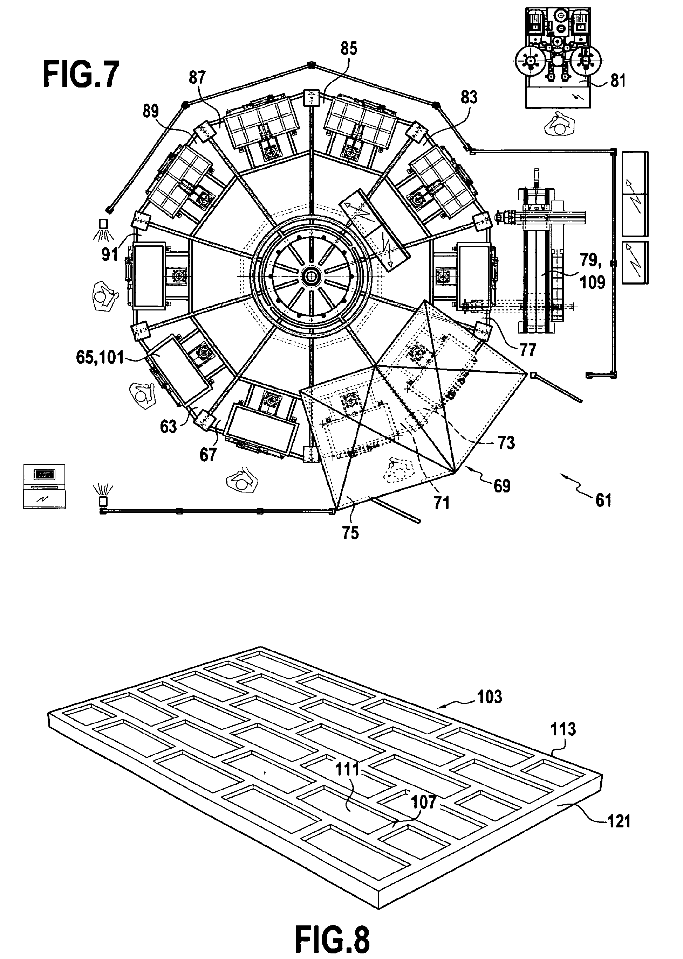

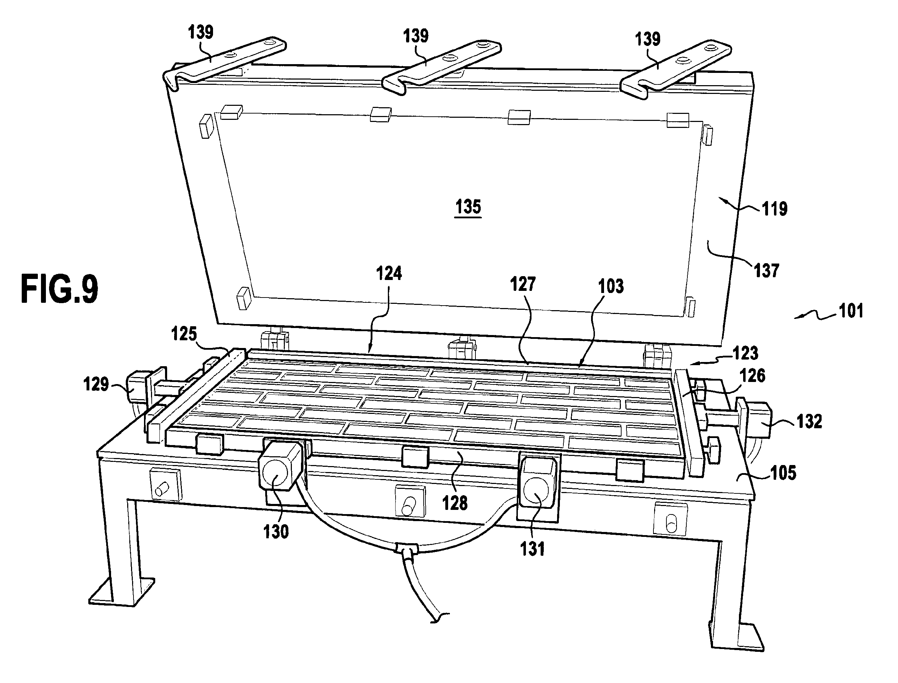

Sur les figures 1 à 3, le panneau est représenté suivant trois vues en plan, respectivement une vue de face, une vue de dessus et une vue de côté ; les plaquettes étant alignées en rangées et en colonnes. Sur la figure 4, le panneau est représenté en perspective, les plaquettes étant disposées en quinconce. Sur la figure 5 le panneau est représenté en perspective et a une forme angulaire. Sur les figures 6 et 7, l'unité de production est représentée en vue de dessus. Sur la figure 8, le gabarit est représenté en perspective. Sur la figure 9, le conformateur est en position ouverte et comprend le gabarit avant positionnement des plaquettes et avant resserrage du contour de la partie inférieure du conformateur sur le contour du gabarit souple.

Le panneau préfabriqué 1, selon la présente invention, est prévu pour le revêtement de murs de bâtiments. Sa conception permet avantageusement de le poser tant sur les murs intérieurs des bâtiments que sur les murs extérieurs. Tel qu'illustré sur les figures 1 à 5, le panneau 1 comprend au moins une couche externe 3 et une couche interne 5. La couche externe 3 constitue une peau apparente lorsque le panneau 1 est posé. Cette couche externe 3 est constituée de plaquettes 7, notamment en terre cuite, en céramique, en béton, en pierre ou tout autre produit reconstitué. Les plaquettes 7 sont espacées les unes des autres et disposées en rangées. Différents agencements des plaquettes 7 peuvent être envisagés ; par exemple, les plaquettes 7 sont alignées les unes en dessous des autres tel que représenté en figure 1, ou elles sont disposées en quinconce tel que représenté en figure 4.

La couche interne 5 constitue une couche de liant permettant de solidariser les plaquettes 7 entre elles. Cette couche 5 de liant est constituée d'une mousse polyuréthane sans utilisation d'adjonction de gaz complémentaire. On peut toutefois envisager tout autre matériau moussable présentant des caractéristiques similaires au polyuréthane et permettant de constituer un liant pour les plaquettes 7. Cette couche 5 de mousse polyuréthane est disposée au contact de la face arrière 8a des plaquettes 7 constituant la couche externe 3. Selon la présente invention, la mousse polyuréthane présente au moins une densité de 150 kg/m³ apte à réduire l'épaisseur totale dudit panneau en dessous de 40 mm. L'utilisation d'une telle densité a pour effet d'augmenter la résistance de la couche interne 5, ce qui permet de réduire son épaisseur tout en conservant des dimensions standard pour les panneaux 1. A ce sujet, les panneaux 1 sont constitués, de préférence, d'une forme plane de largeur comprise entre 900 et 1050 mm et une hauteur comprise entre 440 et 460 mm. On utilise de préférence une largeur de panneau égale à 924 mm lorsque les plaquettes sont alignées les une en dessous des autres, tel qu'illustré en figure 1, et une largeur de 1034 mm lorsque les plaquettes sont disposées en quinconce, tel qu'illustré en figure 4 ; leur hauteur est, de préférence, de 450 mm. Cet agencement en quinconce des plaquettes permet, par ailleurs, de réaliser l'emboîtement entre les panneaux. On peut également prévoir des panneaux présentant une forme angulaire tel qu'illustré en figure 5.

Selon un mode préférentiel, la mousse polyuréthane se compose d'un mélange de polyol et d'isocyanate, comprenant une densité de 178 kg/m³. Cette densité est obtenue pour un rapport de mélange polyol/isocyanate égal à 100/110. Selon cette densité, on parvient à réduire l'épaisseur de la couche de liant à 8 mm au dos des plaquettes et de 15 mm au niveau des joints pour une épaisseur des plaquettes de l'ordre de 17 mm, ce qui permet d'obtenir une épaisseur totale de panneau de 25 mm. Dans l'hypothèse où des plaquettes plus minces seraient utilisées, l'épaisseur totale du panneau pourrait baisser. Par exemple, pour des plaquettes de 10 ou 9 mm, l'épaisseur totale du panneau pourrait descendre respectivement à 18 ou 17 mm.

La couche externe 3 du panneau 1 selon l'invention comprend également de la poudre de silice, notamment du sable. Cette poudre de silice est disposée entre les espacements des plaquettes 7 et agrippée sur la face avant 8b de la couche de liant 5. Elle a pour fonction de faciliter l'adhérence avec un matériau additionnel de finition utilisé pour la réalisation d'un joint de finition entre les plaquettes 7 et chacun des panneaux 1, lorsque la pose du revêtement est achevée, ce qui permet de dissimuler les joints de raccordement entre lesdits panneaux 1 installés sur le mur et les fixations mécaniques.

De manière préférentielle, le panneau comprend sur ses bords des moyens de positionnement. Ces moyens de positionnement sont agencés sur les bords supérieur, inférieur et latéraux des panneaux ; le bord latéral gauche 9, illustré sur les figures 1 et 2, d'un premier panneau est apte à être positionné derrière le bord latéral droit 11, illustré sur les figures 1 et 2, d'un second panneau adjacent au premier. De même le bord supérieur 13, illustré sur les figures 1 et 3, d'un premier panneau, est apte à être positionné derrière le bord inférieur 15, illustré sur les figures 1 et 3, d'un second panneau disposé au-dessus du premier panneau.

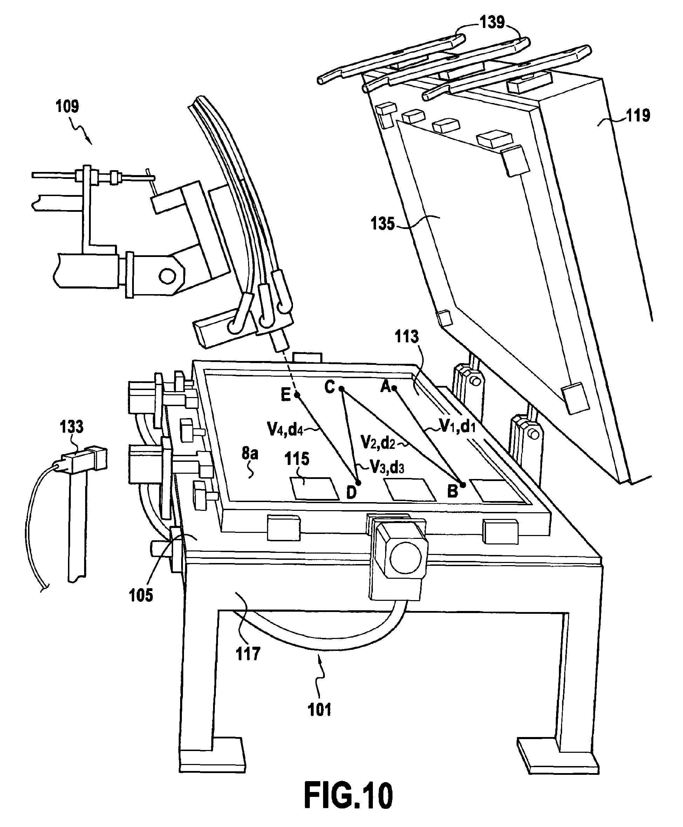

La présente invention porte également sur le procédé de fabrication du panneau 1 préfabriqué tel que décrit ci-dessus. Le procédé comprend tout d'abord une étape consistant à poser les plaquettes 7 dans le fond d'un conformateur 101, en rangées, et avec un espacement entre chacune elles ; pour faciliter le positionnement des plaquettes, on utilise un gabarit 103 adapté au type de plaquette et à la forme du panneau à fabriquer. Ce conformateur 101, illustré en figure 9 et ce gabarit 103 illustré en figure 8 seront décrits plus en détails ci-après ; ce gabarit 103 permet de positionner et de maintenir écartées les plaquettes entre elles dans le fond 105 du conformateur 101. La face externe des plaquettes est positionnée en appui dans le fond du gabarit 103 lui-même disposé dans le fond 105 du conformateur 101. La seconde étape consiste en la dépose d'une couche de silice, tel que du sable, entre les plaquettes 7; le sable est donc disposé entre les espacements des plaquettes 7. L'épaisseur de la couche de silice correspond à l'épaisseur des plaquettes 7 moins l'épaisseur de matière des parties saillantes 107 du gabarit. Il s'ensuit une étape de chauffe du conformateur 101 jusqu'à atteinte d'une température des plaquettes et de la silice comprise entre 30° et 40° C, et de préférence entre 35° et 40° C ; pour cela, la température de chauffe du conformateur est de 40° C pendant une durée comprise entre 180 secondes et 360 secondes selon le type de chauffage utilisé. Cette température a pour fonction de garantir une meilleure polymérisation de la mousse polyuréthane lors de la constitution de la couche interne 5. Lorsque la température de chauffe est atteinte, on réalise l'épandage du polyuréthane à l'état liquide sur la face arrière 8a des plaquettes 7 et de la couche de silice. Le polyuréthane à l'état liquide est versé selon une quantité spécifique au type de panneau à obtenir ; une fois expansée et stabilisée, la mousse polyuréthane présente une densité supérieure à 150 kg/m³, et de préférence supérieure à 178 kg/m³. La mise en oeuvre d'une mousse polyuréthane d'une telle densité, sur une très faible épaisseur, nécessite d'épandre le polyuréthane à l'état liquide suivant un cheminement prédéfini par rapport à la forme du panneau et à l'expansion de la mousse polyuréthane sur la surface de la couche externe 3, tel que cela est illustré sur la figure 10, pour éviter une discontinuité de la couche interne 5 pouvant engendrer un mauvais agrippement des plaquettes avec la couche de liant. Par ailleurs, ce cheminement permet de réaliser l'épandage en une durée déterminée garantissant la fermeture du conformateur avant que la phase d'expansion de la mousse polyuréthane ne commence. Ce cheminement est spécifique à chaque panneau préfabriqué, selon les plaquettes utilisées et la forme du panneau à réaliser. Pour cela, l'épandage du polyuréthane à l'état liquide est réalisé au moyen d'un robot 109, illustré en figure 10, muni d'une buse d'éjection, ledit robot 109 étant apte à assurer une répartition du polyuréthane à l'état liquide sur la face arrière 8a des plaquettes 7 et sur la couche de silice suivant le cheminement déterminé, en évitant une chute de la température de chauffe du conformateur. Le conformateur est ensuite fermé. La compression du polyuréthane à l'état liquide épandu, pourra former ainsi une couche homogène sur toute la face arrière de la couche externe 3 et assurer une parfaite adhérence entre la couche de liant 5, les plaquettes 7 et la poudre de silice. Par ailleurs, le cheminement déterminé assure que le polyuréthane à l'état liquide ne déborde pas de la face arrière des plaquettes lors de sa compression. On distingue sur la figure 10 le robot 109 réalisant l'épandage du polyuréthane à l'état liquide sur les plaquettes 7 pour la fabrication d'un type de panneau, tel qu'illustré en figure 4. Le robot 109 effectue des déplacements linaires entre plusieurs points A,B,C,D,E sur la face arrière 8a des plaquettes 7, ledit robot se déplaçant à des vitesses différentes V1,V2,V3,V4 et à des débits différents D1,D2,D3,D4 entre chaque déplacement linéaire, selon la longueur de celui-ci et la position sur la surface des plaquettes qui tient compte de la forme du panneau 7. On peut toutefois envisager un déplacement du robot 109 à vitesse constante et à débit variable, voire inversement un déplacement du robot à vitesse variable et à débit constant. Il se produit ensuite une phase d'expansion de la mousse polyuréthane après fermeture du conformateur 101, jusqu'à stabilisation de celle-ci. Une fois la mousse polyuréthane stabilisée, on extrait le panneau préfabriqué. De préférence on laisse la mousse polyuréthane se stabiliser pendant une durée comprise entre 360 et 450 secondes avant démoulage.

Selon un autre aspect de la présente invention, le gabarit 103, illustré en figure 8, permettant la réception des plaquettes 7 dans le fond du conformateur, et leur maintien écarté entre elles avec un espacement, ledit espacement correspondant à un joint de maçonnerie, est constitué dans un matériau souple. Le gabarit présente donc la forme d'une grille ou d'un quadrillage souple, les dimensions des cadrans 111 ou emplacement du quadrillage correspondant plus ou moins aux dimensions des plaquettes, lesquelles peuvent présenter des dimensions variables. Ce gabarit est réalisé dans un matériau souple qui est de préférence du silicone.

De manière préférentielle, le gabarit 103, illustré en figure 8 présente la forme d'une coque 113 munie d'une pluralité de cadrans ou emplacements formant une grille ou un quadrillage, ces cadrans constituant des zones de réception pour les plaquettes, lesdits cadrans 111 étant séparés par des parties saillantes 107, lesquelles permettent de maintenir séparées entre elles les plaquettes 7 disposées dans les zones de réception, avec un espacement, les dimensions des parties saillantes correspondant aux dimensions habituelles des joints de maçonnerie. Cette coque 113 est donc entièrement réalisée en matériau souple, notamment en silicone. Les formes et dimensions du gabarit 103 sont donc agencées pour être disposées à l'intérieur d'un conformateur 101 pour la fabrication des panneaux préfabriqués, lequel sera décrit ci-après. Par ailleurs, il comprend des plots complémentaires 115, amovibles, illustrés en figure 10, et réalisés de préférence également en matière silicone comme la coque, ces plots amovibles 115 prenant la forme de briquettes de dimensions correspondant aux cadrans 111 et dont l'épaisseur permet de dépasser des parties saillantes 107 séparant lesdits cadrans, la partie débordante du plot 115 correspondant à l'épaisseur de la couche interne 5 du panneau 1 que l'on souhaite obtenir. On distingue par exemple sur la figure 10 le positionnement de ces plots 115 aux extrémités latérales du gabarit 103 permettant d'obtenir un panneau 1, tel qu'illustré sur la figure 4. Ainsi, le conformateur 101 illustré en figure 9 comprend une partie inférieure 117 formant un fond 105 pour la réception du gabarit 103, des plaquettes 7 et du sable constituant la couche externe 3 et disposés dans ledit gabarit 103, ainsi que de la mousse polyuréthane constituant la couche de liant 5. Cette partie inférieure 117 permet donc préalablement la réception du gabarit 103 en silicone qui est disposé dans le fond 105 de celle-ci et qui reçoit lesdites plaquettes 7 en les maintenant espacées préalablement à l'ajout de la silice ou sable. En outre, le conformateur 101 comprend une partie supérieure 119 formant un couvercle de fermeture de celui-ci. De manière préférentielle, la fermeture de la partie supérieure 119 sur la partie inférieure 117 du conformateur 101 est réalisée de manière automatique, une fois l'épandage du polyuréthane à l'état liquide réalisée. De manière préférentielle et non limitative, la coque 113 du gabarit 103 comprend un bord périphérique 121 délimitant son contour et celui de la couche externe du panneau préfabriqué. Ce bord périphérique 121 s'étend verticalement vers le haut lorsqu'il est disposé à l'intérieur de la partie inférieure 117 du conformateur, sur son fond 105. La partie inférieure 117 du conformateur, tel qu'illustré en figure 9, comprend des moyens 123 de réception du gabarit 103. Ces moyens 123 permettent en outre de réaliser une compression sur le contour du gabarit, c'est-à-dire sur le bord périphérique 121, de manière à comprimer ledit gabarit 103. Cette compression du gabarit est réalisée une fois que les plaquettes 7 sont en position dans les cadrans 111 du gabarit, la compression permettant de resserrer lesdits cadrans 111 qui exercent une pression et maintiennent convenablement les plaquettes 7 en position. Ainsi, lors de la fermeture de la partie supérieure 119 après épandage du polyuréthane à l'état liquide, la fermeture du conformateur 101 assure une pression importante sur ledit polyuréthane à l'état liquide afin de permettre sa répartition sur toute la surface des plaquettes 7, la pression exercée sur les plaquettes n'ayant aucune incidence sur celle-ci du fait qu'elles sont maintenues convenablement par les cadrans 111 resserrés sur le contour desdites plaquettes. Ces moyens 123 de réception et de compression sont constitués de préférence, tel qu'illustré sur la figure 9, par quatre barres 125,126,127,128 formant un contour 124 à l'intérieur duquel est disposé le gabarit. De manière préférentielle, la barre 127 disposée sur le fond 105 à l'arrière de la partie inférieure 117 du conformateur, est fixe sur ledit fond, tandis que les deux barres 125,126 latérales et la barre 128 avant sont mobiles ou escamotables et commandées par des actionneurs 129, 130,131,132, ce qui permet de dégager les deux barres latérales 125, 126 et la barre avant 128 par rapport à la barre arrière 127 de manière à agrandir les dimensions du contour 124 et à laisser libre le gabarit 103. Au contraire, lorsque les barres latérales 125,126 et la barre avant 128 sont resserrées au contact avec la barre arrière 127, le contour 124 est rétracté, position dans laquelle le bord périphérique 121 du gabarit souple 103 est comprimé par ledit contour 124 en position rétractée. En position rétractée, les barres 125,126,127,128 forment un bord périphérique interne au contact du bord périphérique 121 du gabarit. La hauteur de barres 124,125,126, 127 est de dimension supérieure à la hauteur du bord périphérique 121 du gabarit 103, la différence de hauteur correspondant à l'épaisseur de la couche interne 5 de mousse polyuréthane. Ces barres délimitent donc le contour de la couche de liant, ce qui garantit que le polyuréthane à l'état liquide ne déborde hors du conformateur lors de la fermeture de la partie supérieure 119 sur la partie inférieure 117, ladite couche de liant étant soumise à la pression exercée par ladite partie supérieure 119 formant un couvercle de fermeture, ce qui permet de répartir uniformément ladite couche de liant sur toute la surface des plaquettes 7.

De manière remarquable, ces barres 125,126,127,128 sont réalisées dans une matière telle que de la résine acétale ou tout autre produit ayant les mêmes caractéristiques qui évite l'adhérence de la mousse polyuréthane après expansion, ladite matière polyuréthane étant au préalable, lorsque le polyuréthane se trouve à l'état liquide, compressée sur le bord périphérique interne des barres en résine acétale ou en tout autre produit ayant les mêmes caractéristiques et dépassant par rapport au bord périphérique du gabarit. Par ailleurs, la compression des barres 125,126,127,128 sur le bord périphérique 121 du gabarit évite les fuites de polyuréthane entre ledit gabarit 103 et le contour 124 sur la partie inférieure du conformateur 101.

La présente invention concerne également une unité de production pour la mise en oeuvre de procédé de fabrication de panneaux 1 préfabriqués.

Selon un premier mode de réalisation, illustré sur la figure 6, l'unité de production 21 est constituée d'une pluralité de postes 23 permettant la mise en oeuvre des différentes étapes de fabrication du panneau préfabriqué. L'unité 21 comprend au moins un conformateur 25,101 équipé d'un gabarit en matériau souple agencé pour concevoir le panneau 1 ; de manière préférentielle et non limitative, l'unité 21 comprend autant de conformateurs 25,101 que de postes de fabrication, de manière à optimiser la production. L'unité 21 comprend un convoyeur 27, notamment du type carrousel, apte à déplacer les conformateurs 25,101 successivement sur chacun des postes, depuis un poste de début de chaîne 29 où le conformateur 25,101 est vide et apte à recevoir les plaquettes, à un poste de fin de chaîne 31 où le panneau préfabriqué 1 est extrait et le conformateur 25,101 nettoyé. L'unité 21 comprend un poste 33 pour la pose des plaquettes 7 dans le gabarit disposé dans le conformateur 25 et pour la pose de la couche de silice entre lesdites plaquettes 7. Ce poste 33 est disposé en aval du poste de début 29. La pose des plaquettes dans le gabarit et de la silice est, de préférence réalisée manuellement ; on peut toutefois envisager une automatisation de ce poste selon le type de plaquettes utilisé pour la conception du panneau préfabriqué. Le poste 33 se décompose, de préférence, en deux postes 33a, 33b distincts successifs, l'un 33a pour la pose des plaquettes 7 dans le fond du conformateur 25, et l'autre 33b pour la pose de la couche de silice entre lesdites plaquettes 7.

Ainsi, le conformateur est en position ouverte et le contour 124 sur la partie inférieure 117 est détendu, ce qui permet d'introduire le gabarit 103 ; les plaquettes 7 sont alors disposées dans des emplacements ou cadrans 111 du gabarit en ajoutant éventuellement des plots 115 complémentaires selon le type de panneaux préfabriqués à réaliser. Une fois les plaquettes 7 en position, le contour 124 sur la partie inférieure est alors rétracté, ce qui permet de comprimer le bord périphérique 121 du gabarit 103 et de resserrer les cadrans 111 sur les plaquettes 7. La mise en place de la silice peut alors être réalisée.

L'unité 21 comprend ensuite un poste 35 pour la chauffe du conformateur 25 contenant les plaquettes et la couche de silice ; ce poste 35 est apte à chauffer les plaquettes et ladite couche de silice à une température de l'ordre de 30° à 40° C. Ce poste 35 est disposé en aval du poste 33b de pose de la silice. Selon ce mode de conception, illustré en figure 6, le poste 35 comprend un tunnel de chauffe 36, du type soufflerie, apte à recevoir successivement au moins deux conformateurs. Selon la conception illustrée en figure 6, il se décompose de quatre postes successifs 35a, 35b, 35c, 35d, le conformateur 25,101 se déplaçant depuis le poste d'entrée 35a jusqu'au poste de sortie 35d, le passage du conformateur 25 au travers du tunnel assurant une durée de chauffe de 180 secondes à 360 secondes à une température de 40° C, permettant d'atteindre une température des plaquettes 7 et de la silice de l'ordre de 35° à 40° C.

L'unité comprend ensuite un poste 37 pour l'épandage du polyuréthane à l'état liquide sur la couche de plaquettes et de silice. Ce poste 37 est disposé en aval de la sortie du tunnel de chauffe 35. Le poste d'épandage 37 comprend une machine de moussage 39 pour la préparation du polyuréthane à l'état liquide et un robot d'épandage 41,109 assurant une répartition uniforme du polyuréthane à l'état liquide sur la face arrière 8a de la couche externe 3. La machine de moussage 39 permet la préparation du mélange de polyol et d'isocyanate avec un rapport de mélange polyol/isocyanate de 100/110, le mélange étant réalisé pendant une durée d' au moins 20 secondes à une température de l'ordre de 20° C, la densité de la mousse polyuréthane obtenue après expansion et stabilisation du polyuréthane à l'état liquide ainsi préparé, étant de 178 kg/m³. Sur ce poste 37, sont agencés des moyens de détection 133 illustrés en figure 10, lesquels permettent de détecter la présence d'une pastille sur le conformateur 25,101 ou à proximité de celui-ci, ladite pastille correspondant au type de panneau préfabriqué à réaliser, en fonction du positionnement des plaquettes 7 à l'intérieur du gabarit et de la présence des plots 115 notamment pour réaliser la forme souhaitée du panneau 1. Pour cela, le conformateur 101 comprendra des moyens de réception desdites pastilles de référence, ces moyens de réception étant positionnés en corrélation avec la position du capteur 133. L'unité comprend donc des moyens de gestion et de commande du robot 109,41, lequel réalise alors l'épandage du polyuréthane à l'état liquide sur les plaquettes 7 selon le cheminement correspondant au panneau 1 à réaliser, en tenant compte des vitesses de déplacement et du débit de polyuréthane à l'état liquide, spécifiques à chaque type de panneau préfabriqué, les données étant enregistrées dans une unité de commande pour chacun de ces types de panneau. Ainsi, l'installation offre une très grande flexibilité.

L'unité 21 comprend ensuite un poste 43 agencé pour permettre l'expansion et la stabilisation de la mousse polyuréthane appliquée sur la couche externe 3. Selon un mode de réalisation illustré en figure 6, ce poste se décompose en quatre postes successifs 43a, 43b, 43c, 43d assurant une durée d'expansion et de stabilisation de la mousse, de préférence, d'au moins 203 secondes. Le nombre de postes successifs 43a, 43b, 43c, 43d est par exemple identique au nombre de postes successifs 35a, 35b, 35c, 35d du poste de chauffe 35.

L'unité 21 comprend ensuite un poste 45 pour l'extraction du panneau préfabriqué et le nettoyage du conformateur 25,101. Ce poste 45 se décompose, de préférence, en deux postes successifs 45a, 45b, le premier 45a permettant le démoulage ou l'extraction du panneau préfabriqué 1 hors du conformateur 25,101 et le second 45b le nettoyage du conformateur 25,101 pour extraire l'excès de silice restant dans ledit conformateur et n'ayant pas adhéré avec la couche de liant. Ces deux postes 45a, 45b peuvent éventuellement constituer respectivement le poste de sortie 31 et le poste d'entrée 29. Par ailleurs, l'extraction du panneau préfabriqué est réalisée en ouvrant dans un premier temps le conformateur, puis en actionnant les barres escamotables, ce qui permet de disposer le contour sur la partie inférieure en position détendue, permettant alors d'extraire le panneau et le gabarit, ce dernier pouvant être ensuite retiré aisément du panneau sans endommager les plaquettes. L'ensemble des opérations sur le conformateur est automatisé.

Sur ce poste, le moule est ouvert en dégageant sa partie supérieure constituant le couvercle de fermeture, puis le panneau préfabriqué est extrait ; lors de l'extraction du panneau préfabriqué, le gabarit 103 en silicone reste éventuellement accroché sur les plaquettes 7 ; il est alors possible de retirer ledit gabarit 103 en déformant la matière silicone sans dégrader les plaquettes. Par ailleurs, le nettoyage se limite à extraire l'excès de silice restant dans la partie inférieure 117 du conformateur et n'ayant pas adhéré à la couche de liant. En outre, la partie supérieure 119 du conformateur, à savoir la face venant au contact du polyuréthane à l'état liquide lors de la fermeture du conformateur, est revêtue d'une surface anti-adhérente 135, illustrée en figure 9, notamment constituée par du tissu de verre ou une feuille de téflon, les dimensions de celles-ci correspondant aux dimensions du contour sur la partie inférieure du conformateur. Cette surface anti-adhérente est assujettie à la face interne 137 de la partie supérieure 119. La présence de cette surface anti-adhérente 135 évite que la mousse polyuréthane n'adhère sur la face interne 137 de la partie supérieure 119 du conformateur et supprime en outre l'utilisation d'une feuille de protection complémentaire tel qu'il était prévu dans l'état de la technique, laquelle devant être remplacée après chaque utilisation.

La fermeture du moule par le couvercle sera réalisée soit directement en fin d'étape sur le poste d'épandage, soit en début d'étape sur le poste d'expansion et de stabilisation, voire durant le transfert entre ces deux postes, avant que ladite expansion et stabilisation n'aient commencé. Ce couvercle assure une pression sur la mousse polyuréthane pour que la couche de liant 5 s'imprègne et adhère uniformément sur la face arrière des plaquettes 7 et que la poudre de silice s'agrippe convenablement sur ladite couche 7 de liant. En outre, le conformateur 101 comprend des moyens de verrouillage 139 automatisés entre la partie inférieure 117 et la partie supérieure 119.

Le convoyeur 27 est agencé pour permettre l'acheminement des conformateurs 25,101 sur chaque poste de production en assurant une fabrication en continu des panneaux. Le convoyeur 27 se compose de chariots 47 sur lesquels sont disposés les conformateurs 25, les chariots se déplaçant successivement sur chaque poste pour réaliser les différentes étapes de fabrication du panneau 1. Pour cela, le convoyeur 27 comprend une chaîne apte à tracter les chariots porte moule 47. Le convoyeur 27 est de préférence agencé en carrousel tel qu'illustré en figure 6, pour assurer une continuité de la production en transitant directement du poste de sortie 31 au poste d'entrée 29.

Selon une variante de conception, illustrée en figure 7, l'unité 61 est organisée en carrousel, comprenant dix postes successifs.

Le premier poste 63 est agencé pour la pose des plaquettes dans les conformateurs 65,101 tel que décrit précédemment. Le second poste 67 est agencé pour la pose de la silice, tel que décrit ci-dessus. L'unité 61 comprend ensuite un poste de chauffe 69, décomposé en deux postes successifs 71 , 73, disposés à l'intérieur d'un tunnel de chauffe 75, fonctionnant de préférence par rayonnement infrarouge, permettant de chauffer les plaquettes et la couche de silice à une température comprise de préférence entre 35 et 40° C, en un temps réduit par rapport au tunnel de chauffe de type soufflerie, tel que celui prévu sur l'unité de production 21 selon le premier mode de conception illustré en figure 6, ce qui permet de réduire le nombre de postes de chauffe à l'intérieur du tunnel. L'unité 61 illustrée en figure 7 comprend ensuite un cinquième poste 77 pour l'épandage du polyuréthane à l'état liquide tel que décrit précédemment pour l'unité 21 illustrée en figure 6, et prévoit donc également un robot d'épandage 79,109 et une machine de moussage 81. Ce poste d'épandage 77 prévoit, de préférence, suite à la répartition uniforme du polyuréthane à l'état liquide, la fermeture automatique du conformateur, telle que décrite ci-dessus. En aval de ce poste d'épandage 77, l'unité de production 61 comprend un poste de polymérisation qui se décompose en quatre postes successifs 83, 85, 87, 89 assurant une expansion de la mousse polyuréthane jusqu'à stabilisation de celle-ci, pendant une durée, de préférence, d'au moins 203 secondes, semblable à celle prévue sur l'unité 21 illustrée en figure 6.

L'unité 61, illustrée en figure 7, comprend enfin un poste de démoulage ou d'extraction 91, pouvant éventuellement se décomposer en deux sous-postes, où le panneau préfabriqué est extrait du conformateur 65,101 et le conformateur est nettoyé tel que décrit pour l'unité 21 illustrée en figure 6. On réalise de préférence les opérations de contrôle qualité et de marquage du panneau sur ce poste de démoulage, une fois le panneau extrait.

L'unité 61,101 comprend un convoyeur permettant d'acheminer les conformateurs 65 sur chacun des postes successifs 63, 67, 71, 73, 77, 83, 85, 87, 89, 91 organisés en carrousel, ce convoyeur étant semblable à celui de l'unité 21 illustrée en figure 6, hormis sa forme circulaire. Selon cette unité 61 illustrée en figure 7, le poste de début de chaîne est donc constitué par le poste 63 de positionnement des plaquettes 7 dans le conformateur, et le poste de fin est constitué par le poste de démoulage 91 ou d'extraction du panneau.

## Revendications

1. Panneau (1) préfabriqué pour le revêtement de murs de bâtiments, comprenant au moins une couche externe (3) constituée de plaquettes (7), notamment en terre cuite, en céramique, en béton, en pierre ou tout autre produit reconstitué, espacées les unes des autres et disposées en rangées, et d'une couche interne (5) disposée au contact de la face arrière de la couche externe (3), et constituant une couche de liant pour les plaquettes (7), la couche (5) de liant étant une mousse polyuréthane, ledit panneau étant **caractérisé en ce que** la couche de liant présente une densité d'au moins 150 kg/m³, l'épaisseur totale dudit panneau (1) étant inférieure à 40 mm.

2. Panneau (1) selon la revendication 1, **caractérisé en ce que** la mousse polyuréthane présente une densité de 178 kg/m³, l'épaisseur totale de panneau (1) étant de 25 mm.

3. Panneau (1) selon l'une des revendications 1 ou 2, **caractérisé en ce que** la mousse polyuréthane se compose d'un mélange de polyol et d'isocyanate, le rapport de mélange polyol/isocyanate étant de 100/110.

4. Panneau (1) selon l'une des revendications 1 à 3, **caractérisé en ce qu'**il comprend de la poudre de silice disposée entre les espacements des plaquettes (7) et adhérant avec la couche (5) de liant.

5. Panneau (1) selon l'une des revendications 1 à 4, **caractérisé en ce qu'**il comprend sur ses bords (9, 11, 13, 15) des moyens de positionnement agencés pour permettre le maintien entre les bords de deux panneaux (1) adjacents.

6. Panneau (1) selon l'une des revendications 1 à 5, **caractérisé en ce qu'**il est constitué d'une forme plane de largeur comprise 900 et 1050 mm et une hauteur comprise entre 440 et 460 mm.

7. Conformateur (101) pour la fabrication de panneaux préfabriqués (1) conforme aux revendications 1 à 6, comprenant un gabarit (103) et une partie inférieure (117) formant un fond (105) pour la réception de la couche externe (3), de la couche interne (5) et du gabarit (103) formant un quadrillage agencé pour recevoir les plaquettes (7) en les maintenant écartées entre elles avec un espacement, ledit gabarit étant constitué dans un matériau souple, notamment en silicone, et présentant la forme d'une coque (113) munie d'une pluralité de zones de réception (111) des plaquettes (7), lesdites zones (111) étant séparées par des parties saillantes (107) formant le quadrillage, ledit conformateur comprenant en outre une partie supérieure (119) formant un couvercle de fermeture au moins pour la compression de la mousse polyuréthane, ladite partie inférieure (117) comprenant des moyens (123) de réception et compression du gabarit (103) souple, agencés pour maintenir en position compressée ledit gabarit (103) une fois les plaquettes (7) disposées dans les zones de réception (111) dudit gabarit, les moyens (123) de réception et de compression étant constitués d'un contour (124) rétractable agencé sur le fond (105) de la partie inférieure (117), au moins une partie (125, 126, 128) dudit contour (124) étant escamotable pour soit disposer le contour (124) en position détendue selon laquelle le gabarit (103) peut être positionné sur le fond (105) de la partie inférieure (117) soit disposer le contour (124) en position rétractée selon laquelle ledit contour (124) compresse le gabarit (103).

8. Conformateur (101) selon la revendication 7, **caractérisé en ce que** le contour (124) est constitué de quatre barres (125, 126, 127, 128), la barre arrière (127) étant fixe sur le fond (105) et les barres latérales (125, 126) et la barre avant (128) étant escamotables sur le fond (105).

9. Procédé de fabrication du panneau (1) préfabriqué conforme à l'une des revendications 1 à 6, comprenant au moins les étapes suivantes :
a. de pose des plaquettes (7) en rangées avec un espacement entre elles dans le fond d'un conformateur (101) conforme aux revendications 7 ou 8, les plaquettes (7) étant disposées dans le gabarit (103) ;
b. de pose d'une couche de silice entre les plaquettes (7) jusqu'à atteindre l'épaisseur desdites plaquettes ;
c. de chauffe du moule jusqu'à atteindre une température des plaquettes et de la silice comprise entre 30° et 40° C ;
d. d'épandage de polyuréthane à l'état liquide, sur la face arrière (8a) des plaquettes (7) et de la couche de silice avec une répartition selon un cheminement établi et spécifique à chaque panneau, ladite répartition étant réalisée au moyen d'un robot d'épandage (39, 41) ;
e. de compression du polyuréthane à l'état liquide, la répartition dudit polyuréthane à l'état liquide, selon un cheminement établi et spécifique à chaque panneau, assurant la formation d'une couche homogène, sur toute la surface du panneau ;
f. d'expansion et de stabilisation de la mousse polyuréthane, la mousse polyuréthane présentant une densité supérieure à 150kg/m³ ;
g. de démoulage du panneau préfabriqué.

10. Procédé selon la revendication 9, **caractérisé en ce que** la température de chauffe est de 30° à 40° C pendant une durée de 180 secondes à 360 secondes.

11. Procédé selon l'une des revendications 9 ou 10, **caractérisé en ce qu'**on laisse la mousse polyuréthane se stabiliser pendant une durée de l'ordre de 360 secondes à 450 secondes avant démoulage.

12. Unité de production (21, 61) pour la mise en oeuvre de procédé de fabrication selon l'une des revendications 9 à 11, comprenant au moins un conformateur (25, 65) conforme aux revendications 7 ou 8, agencé pour concevoir le panneau (1) préfabriqué conforme aux revendications 1 à 6, l'unité comprenant successivement :
- au moins un poste (33, 63, 67) pour la pose des plaquettes dans le conformateur, puis pour la pose de la couche de silice entre lesdites plaquettes (7) ;
- au moins un poste (35, 69) équipé d'un tunnel de chauffe (36, 75) du conformateur (25, 65, 101) contenant les plaquettes et la couche de silice, apte à chauffer lesdites plaquettes et ladite couche de silice à une température comprise entre 30° et 40° C ;
- au moins un poste (37, 77) pour l'épandage équipé d'une machine de moussage pour la constitution du polyuréthane à l'état liquide, et d'un robot d'épandage (39, 41) pour la répartition dudit polyuréthane à l'état liquide, suivant un cheminement établi et spécifique à chaque type de panneau (1), sur la couche de plaquettes et de silice ;
- au moins un poste (43, 83, 85, 87, 89) pour l'expansion et la stabilisation de la mousse polyuréthane, la mousse polyuréthane présentant une densité supérieure à 150kg/m³;
- au moins un poste (45,91) pour l'extraction du panneau préfabriqué et le nettoyage du conformateur ; et
- un convoyeur (27) du type carrousel apte à déplacer les conformateurs (25, 65, 101) successivement sur chacun des postes.

## Claims

1. A prefabricated panel (1) for the cladding of building walls, comprising at least one external layer (3) consisting of platelets (7), notably in terracotta, in ceramic, in concrete, in stone or any other reconstituted product, spaced apart from each other, and arranged in rows, and an internal layer (5) arranged in contact with the rear face of the external layer (3), and forming a binder layer for the platelets (7), the binder layer (5) being a polyurethane foam, said panel being **characterized in that** the binder layer has a density of at least 150 kg/m³, the total thickness of said panel (1) being less than 40 mm.

2. The panel (1) according to claim 1, **characterized in that** the polyurethane foam has a density of 178 kg/m³, the total thickness of the panel (1) being 25 mm.

3. The panel (1) according to one of claims 1 or 2, **characterized in that** the polyurethane foam consists of a mixture of polyol and of isocyanate, the polyol/isocyanate mixture ratio being 100/110.

4. The panel (1) according to one of claims 1 to 3, **characterized in that** it comprises silica powder, arranged between the spacings of the platelets (7) and adhering with the binder layer (5).

5. The panel (1) according to one of claims 1 to 4, **characterized in that** it comprises on its edges (9, 11, 13, 15) positioning means laid out so as to allow two adjacent panels (1) to be maintained between the edges.

6. The panel (1) according to one of claims 1 to 5, **characterized in that** it consists of a flat shape with a width comprised between 900 and 1,050 mm and a height comprised between 440 and 460 mm.

7. A conformer (101) for making prefabricated panels (1) according to claims 1 to 6, comprising a jig (103) and a lower portion (117) forming a bottom (105) for receiving the external layer (3), the internal layer (5) and the jig (103) forming a grid pattern laid out for receiving the platelets (7) by maintaining them apart from each other with a spacing, said jig being formed in a flexible material, notably in silicone, and having the shape of a shell (113) provided with a plurality of areas (111) for receiving the platelets (7), said areas (111) being separated by protruding portions (107) forming the grid pattern, said conformer further comprising an upper portion (119) forming a closing lid at least for compressing the polyurethane foam, said lower portion (117) comprising means (123) for receiving and compressing the flexible jig (103), laid out so as to maintain said jig (103) in a compressed position once the platelets (7) are arranged in the receiving areas (111) of said jig, the receiving and compression means (123) consisting of a retractable contour (124), laid out on the bottom (105) of the lower portion (117), at least one portion (125, 126, 128) of said contour (124) being retractable in order to either arrange the contour (124) in a relaxed position according to which the jig (103) may be positioned on the bottom (105) of the lower portion (117), or arrange the contour (124) in the retracted position according to which said contour (124) compresses the jig (103).

8. The conformer (101) according to claim 7, **characterized in that** the contour (124) consists of four bars (125, 126, 127, 128), the rear bar (127) being fixed on the bottom (105) and the lateral bars (125, 126) and the front bar (128) being retractable on the bottom (105).

9. A method for manufacturing the prefabricated panel (1) in accordance with one of claims 1 to 6, comprising at least the following steps:
a. laying the platelets (7) in rows with a spacing between each other in the bottom of a conformer (101) in accordance with claims 7 or 8, the platelets (7) being arranged in the jig (103);
b. laying a silica layer between the platelets (7) until the thickness of said platelets is reached;
c. heating the mold until a temperature of the platelets and of the silica comprised between 30° and 40°C is reached;
d. applying polyurethane in the liquid state, on the rear face (8a) of the platelets (7) and of the silica layer with a distribution along an established path and specific to each panel, said distribution being achieved by means of an application robot (39, 41);
e. compressing polyurethane in the liquid state, the distribution of said polyurethane in the liquid state, along an established path and specific to each panel, ensuring the formation of a homogeneous layer, over the whole surface of the panel;
f. expanding and stabilizing the polyurethane foam, the polyurethane foam having a density above 150 kg/m³;
g. removing the prefabricated panel from the mold.

10. The method according to claim 9, **characterized in that** the heating temperature is from 30° to 40°C for a duration from 180 seconds to 360 seconds.

11. The method according to one of claims 9 or 10, **characterized in that** the polyurethane foam is left to stabilize for a duration of the order of 360 seconds to 450 seconds before removal from the mold.

12. A production unit (21, 61) for applying a method for manufacturing according to one of claims 9 to 11, comprising at least one conformer (25, 65) in accordance with claims 7 or 8, laid out for designing the prefabricated panel (1) in accordance with the claims 1 to 6, the unit successively comprising:
- at least one station (33, 63, 67) for laying the platelets in the conformer, and then for laying the silica layer between said platelets (7);
- at least one station (35, 69) equipped with a heating tunnel (36, 75) of the conformer (25, 65, 101) containing the platelets and the silica layer, capable of heating said platelets and said silica layer to a temperature comprised between 30° and 40°C;
- at least one station (37, 77) for the application equipped with a foaming machine for forming polyurethane in the liquid state, and an application robot (39, 41) for distributing said polyurethane in the liquid state, along an established path and specific to each type of panel (1) on the layer of platelets and of silica;
- at least one station (43, 83, 85, 87, 89) for expanding and stabilizing the polyurethane foam, the polyurethane foam having a density above 150 kg/m³;
- at least one station (45, 91) for extracting the prefabricated panel and for cleaning the conformer; and
- a conveyor (27) of the carousel type capable of successively displacing the conformers (25, 65, 101) on each of the stations.

## Patentansprüche

1. Fertigpaneel (1) für die Verkleidung von Gebäudewänden, umfassend wenigstens eine Außenschicht (3), die von Platten (7), insbesondere aus Ton, aus Keramik, aus Beton, aus Stein oder jedwedem anderen rekonstituierten Produkt gebildet ist, welche voneinander beabstandet und in Reihen angeordnet sind, sowie eine Innenschicht (5), die in Kontakt mit der Rückseite der Außenschicht (3) angeordnet ist und eine Bindemittelschicht für die Platten (7) bildet, wobei die Bindemittelschicht (5) ein Polyurethanschaum ist, wobei das Paneel **dadurch gekennzeichnet ist, daß** die Bindemittelschicht eine Dichte von wenigstens 150 kg/m³ aufweist, wobei die Gesamtdicke des Paneels (1) weniger als 40 mm beträgt.

2. Paneel (1) nach Anspruch 1, **dadurch gekennzeichnet, daß** der Polyurethanschaum eine Dichte von 178 kg/m³ aufweist, wobei die Gesamtdicke des Paneels (1) 25 mm beträgt.

3. Paneel (1) nach einem der Ansprüche 1 oder 2, **dadurch gekennzeichnet, daß** der Polyurethanschaum aus einem Gemisch aus Polyol und Isocyanat besteht, wobei das Mischungsverhältnis Polyol/Isocyanat 100/110 beträgt.

4. Paneel (1) nach einem der Ansprüche 1 bis 3, **dadurch gekennzeichnet, daß** es Siliziumdioxidpulver umfaßt, das in den Zwischenräumen der Platten (7) angeordnet ist und mit der Bindemittelschicht (5) haftet.

5. Paneel (1) nach einem der Ansprüche 1 bis 4, **dadurch gekennzeichnet, daß** es an seinen Rändern (9, 11, 13, 15) Positionierungsmittel umfaßt, die angeordnet sind, um das Halten zwischen den Rändern von zwei benachbarten Paneelen (1) zu ermöglichen.

6. Paneel (1) nach einem der Ansprüche 1 bis 5, **dadurch gekennzeichnet, daß** es von einer ebenen Form mit einer Breite zwischen 900 und 1050 mm und einer Höhe zwischen 440 und 460 mm gebildet ist.

7. Formgebungsvorrichtung (101) für die Herstellung von Fertigpaneelen (1) nach den Ansprüchen 1 bis 6, umfassend eine Schablone (103) und einen unteren Teil (117), der einen Boden (105) für die Aufnahme der Außenschicht (3), der Innenschicht (5) und der ein Raster bildenden Schablone (103) bildet, die dazu eingerichtet ist, die Platten (7) mit einem Abstand voneinander entfernt haltend aufzunehmen, wobei die Schablone aus einem flexiblen Material, insbesondere aus Silikon ausgebildet ist und die Form einer Schale (113) aufweist, welche mit einer Vielzahl von Bereichen zur Aufnahme (111) der Platten (7) ausgestattet ist, wobei die Bereiche (111) durch vorspringende Teile (107), die das Raster bilden, getrennt sind, wobei die Formgebungsvorrichtung ferner einen oberen Teil (119) umfaßt, der einen Deckel zum Verschließen wenigstens für das Komprimieren des Polyurethanschaums bildet, wobei der untere Teil (117) Mittel (123) zur Aufnahme und zum Komprimieren der flexiblen Schablone (103) umfaßt, die dazu eingerichtet sind, die Schablone (103) in zusammengedrückter Position zu halten, sobald die Platten (7) in den Aufnahmebereichen (111) der Schablone angeordnet sind, wobei die Aufnahme- und Kompressionsmittel (123) von einer zusammenziehbaren Kontur (124) gebildet sind, die auf dem Boden (105) des unteren Teils (117) angeordnet ist, wobei wenigstens ein Teil (125, 126, 128) der Kontur (124) einfahrbar ist, um die Kontur (124) entweder in entspannter Position anzuordnen, in der die Schablone (103) auf dem Boden (105) des unteren Teils (117) positioniert werden kann, oder die Kontur (124) in zusammengezogener Position anzuordnen, in der die Kontur (124) die Schablone (103) zusammendrückt.

8. Formgebungsvorrichtung (101) nach Anspruch 7, **dadurch gekennzeichnet, daß** die Kontur (124) von vier Stangen (125, 126, 127, 128) gebildet ist, wobei die hintere Stange (127) auf dem Boden (105) fest liegt und die seitlichen Stangen (125, 126) sowie die vordere Stange (128) auf dem Boden (105) einfahrbar sind.

9. Verfahren zur Herstellung des Fertigpaneels (1) nach einem der Ansprüche 1 bis 6, umfassend wenigstens die folgenden Schritte des:
a. Einlegens der Platten (7) in Reihen mit einem Abstand voneinander, im Boden einer Formgebungsvorrichtung (101) nach den Ansprüchen 7 oder 8, wobei die Platten (7) in der Schablone (103) angeordnet werden,
b. Aufbringens einer Siliziumdioxidschicht zwischen den Platten (7) bis die Dicke der Platten erreicht ist,
c. Erhitzens der Form bis eine Temperatur der Platten und des Siliziumdioxids zwischen 30 °C und 40 °C erreicht ist,
d. Ausbreitens von Polyurethan in flüssigem Zustand auf der Rückseite (8a) der Platten (7) und der Siliziumdioxidschicht mit einer Verteilung entsprechend einem festgelegten und für jedes Paneel spezifischen Verlauf, wobei die Verteilung mittels eines Ausbreitungsroboters (39, 41) vollzogen wird,
e. Komprimierens des Polyurethans in flüssigem Zustand, wobei die Verteilung des Polyurethans in flüssigem Zustand entsprechen einem festgelegten und für jedes Paneel spezifischen Verlauf die Ausbildung einer homogenen Schicht über die gesamte Fläche des Paneels sicherstellt,
f. Expandierens und Stabilisierens des Polyurethanschaums, wobei der Polyurethanschaum eine Dichte von über 150 kg/m³ aufweist,
g. Ausformens des Fertigpaneels.

10. Verfahren nach Anspruch 9, **dadurch gekennzeichnet, daß** die Heiztemperatur 30 °C bis 40 °C über eine Dauer von 180 Sekunden bis 360 Sekunden beträgt.

11. Verfahren nach einem der Ansprüche 9 oder 10, **dadurch gekennzeichnet, daß** man den Polyurethanschaum sich über eine Dauer in der Größenordnung von 360 Sekunden bis 450 Sekunden vor dem Ausformen stabilisieren läßt.

12. Produktionseinheit (21, 61) für die Durchführung des Herstellungsverfahrens nach einem der Ansprüche 9 bis 11, umfassend wenigstens eine Formgebungsvorrichtung (25, 65) nach den Ansprüchen 7 oder 8, die eingerichtet ist, um das Fertigpaneel (1) nach den Ansprüchen 1 bis 6 zu gestalten, Einheit, die nacheinander umfaßt:
- wenigstens eine Station (33, 63, 67) für das Einlegen der Platten in die Formgebungsvorrichtung, dann für das Aufbringen der Siliziumdioxidschicht zwischen den Platten (7),
- wenigstens eine Station (35, 69), die mit einem Tunnel zum Erhitzen (36, 75) der die Platten und die Siliziumdioxidschicht enthaltenden Formgebungsvorrichtung (25, 65, 101) ausgestattet ist, der geeignet ist, die Platten und die Siliziumdioxidschicht auf eine Temperatur zwischen 30 °C und 40 °C zu erhitzen,
- wenigstens eine Station (37, 77) zum Ausbreiten, die mit einer Aufschäummaschine für die Bildung des Polyurethans in flüssigem Zustand und mit einem Ausbreitungsroboter (39, 41) für die Verteilung des Polyurethans in flüssigem Zustand entsprechend einem festgelegten und für jeden Paneeltyp (1) spezifischen Verlauf auf der Schicht aus Platten und Siliziumdioxid ausgestattet ist,
- wenigstens eine Station (43, 83, 85, 87, 89) für das Expandieren und das Stabilisieren des Polyurethanschaums, wobei der Polyurethanschaum eine Dichte von über 150 kg/m³ aufweist,
- wenigstens eine Station (45, 91) zum Herausnehmen des Fertigpaneels und zum Reinigen der Formgebungsvorrichtung sowie
- eine Fördereinrichtung (27) vom Typ Kreisförderer, der geeignet ist, die Formgebungsvorrichtungen (25, 65, 101) nacheinander an jede der Stationen zu bewegen.
